# EUROPEAN PATENT APPLICATION

(11) **EP 0 735 411 A2**
(43) Date of publication of application: **02.10.1996**
(21) Application number: 96300434.6
(22) Date of filing: 23.01.1996
(51) Int. Cl.: G03B 35/00

(54) **Adhesive materials for use in a process of making three-dimensional images**

(30) Priority: 24.01.1995 US 378120
(71) Applicant: EASTMAN KODAK COMPANY, Rochester, New York 14650-2201 (US)
(72) Inventor: Smith, Thomas M., c/o Eastman Kodak Co., Rochester, New York 14650-2201 (US); Kress, Robert J., c/o Eastman Kodak Co., Rochester, New York 14650-2201 (US); Gates, Leonard S., c/o Eastman Kodak Co., Rochester, New York 14650-2201 (US)
(74) Representative: Jones, Alan John

(57) **Abstract**

A method of producing a three-dimensional laminated hardcopy image including storing a processed image in a substrate, providing a lenticular sheet of material to be placed over the processed image to thereby complete the three-dimensional image, and providing a dry adhesive on at least one surface of the substrate or the sheet to fasten the substrate to the sheet, such adhesive being characterized by a high molecular weight transparent polymer which when moistened is activated from a dry to a binding state and having the following structure 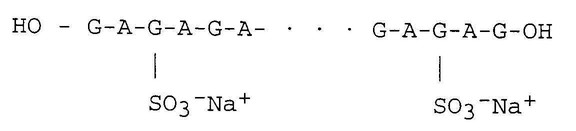
wherein A is an aromatic dicarboxylic acid moiety, G is an aliphatic or cycloaliphatic glycol residue, and -OH is an hydroxy end group.

## Description

### Field of Invention

The present invention relates to methods of producing three-dimensional hardcopy images.

### BACKGROUND OF THE INVENTION

Three-dimensional images sometimes referred to as "depth images" are currently produced, by the Eastman Kodak Company, using a radiation-curable monomeric adhesive to laminate a uniquely prepared, processed, film substrate to a transparent, plastic lenticular sheet. For examples of such three-dimensional images, see commonly assigned U.S. Patent No. 5,278,608 to Taylor et al. The adhesive is gravure-coated onto the imaged side of the processed print or transparency which is subsequently laminated to the smooth surface of the lenticular sheet. After optical alignment (to produce the desired visual effect) the composite is exposed to an ultra-violet radiation source to "cure" or cross-link the adhesive. This process is discussed in more detail in RadCure Review, Vol. 2, Number 3, March 1993. Although this process has proved to have been quite effective, it is not without deficiencies. Among the disadvantages cited in the RadCure Review article are the cost and complexity of UV-securing equipment; the health and physical hazards associated with radiation-curable formulations and equipment, which include a propensity for dermatological reactions and sensitization, potential exposure to UV light and generation of ozone; and the lenticular sheet must be transparent to ultra-violet radiation which limits the number of materials available for use. Additionally, the radiation-curable adhesive formulations identified to date exhibit only a modest level of bond strength with failure occurring primarily at the adhesive/image surface interface. In theory, the adhesive should be cross-linked sufficiently to form a thermoset layer capable of withstanding elevated temperatures. In reality, however, the current bond is particularly susceptible to even modest temperature increases and can lose as much as 80% of its peel strength at only 40°C above ambient. This fact may reflect variability in the curing process and indicates a lack of robustness.

### SUMMARY OF THE INVENTION

It is therefore an object of the present invention to provide an improved method of securing by an adhesive a lenticular sheet to a processed image substrate.

This object is achieved by a method of producing a three-dimensional laminated hardcopy image comprising the steps of:
(a) storing a processed image in a substrate;
(b) providing a lenticular sheet of material to be placed over the processed image to thereby complete the three-dimensional image; and
(c) providing a dry adhesive on at least one surface of the substrate or the sheet to fasten the substrate to the sheet, such adhesive being characterized as a high molecular weight transparent polymer which when moistened is activated from a dry to a binding state and having the following structure: 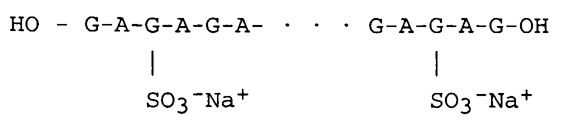 wherein:
   A is an aromatic dicarboxylic acid moiety;
   G is an aliphatic or cycloaliphatic glycol residue; and
   -OH is an hydroxy end group.

Such polymers are commercially available in either the dry state or dispersed in water. These materials, known as Eastman AQ polymers, are available from the Eastman Chemical Company and are more fully discussed in Publication #GN-389B entitled "Eastman AQ Polymers - Properties and Applications", May 1990. It has been discovered that the present components of a depth image can be successfully laminated using a moistenable adhesive, pre-applied to either surface of the individual members. In another embodiment of this invention, a third component consisting of a transparent carrier web coated on both sides with such an adhesive, can be used to laminate uncoated elements. In another embodiment, an alternative scenario involves the use of an aqueous adhesive system to "wet laminate" uncoated carriers much like the current operation.

### Advantages

It is a feature of this invention to provide a method of preparing depth image laminates using fewer, less-expensive, safer mechanical components and an adhesive system that produces stronger bonds over a wider range of environmental conditions while at the same time is less hazardous, non-toxic and less expensive.

An advantage of the present invention includes the use of water as the fluid vehicle and eliminates the need for radiation-curing equipment. The laminate dries by a combination of water dissipation along the open edges of the laminate as well as diffusion into the hydroscopic layers of the processed image. The resultant bond is substantial and permanent, in that destruction of the film support or delamination of the image layers occurs as the primary failure mode. This level of bond strength is not degraded at temperatures within the range of -5 to 60°C.

The overall advantages of preparing depth images in the manner described in this disclosure include:
a) elimination of the monomeric adhesive coating operation immediately prior to assembly. Either of the carriers or proposed interlayer can be adhesive coated off-line or adhesive could be applied at the laminator;
b) elimination of the monomeric adhesive also eliminates the need for expensive, radiation-curing equipment and the associated ozone recovery or abatement equipment;
c) elimination of the monomeric adhesive eliminates employee exposure to relatively toxic chemicals and their fumes throughout the manufacturing operation;
d) scale-up to larger format images would be facilitated due to a minimum of equipment required and the possibility of off-line adhesive coating;
e) superior bond strength can be obtained at ambient and realistic temperature extremes. Typical values are presented in Table 1; and
f) lower manufacturing costs and potentially lower adhesive material costs can be achieved. Current adhesive costs approximately $12.56/kg or $.075/m² of laminate. Eastman Chemical Company adhesive AQ29D costs $7.49/kg dry or $.05/m² of laminate.

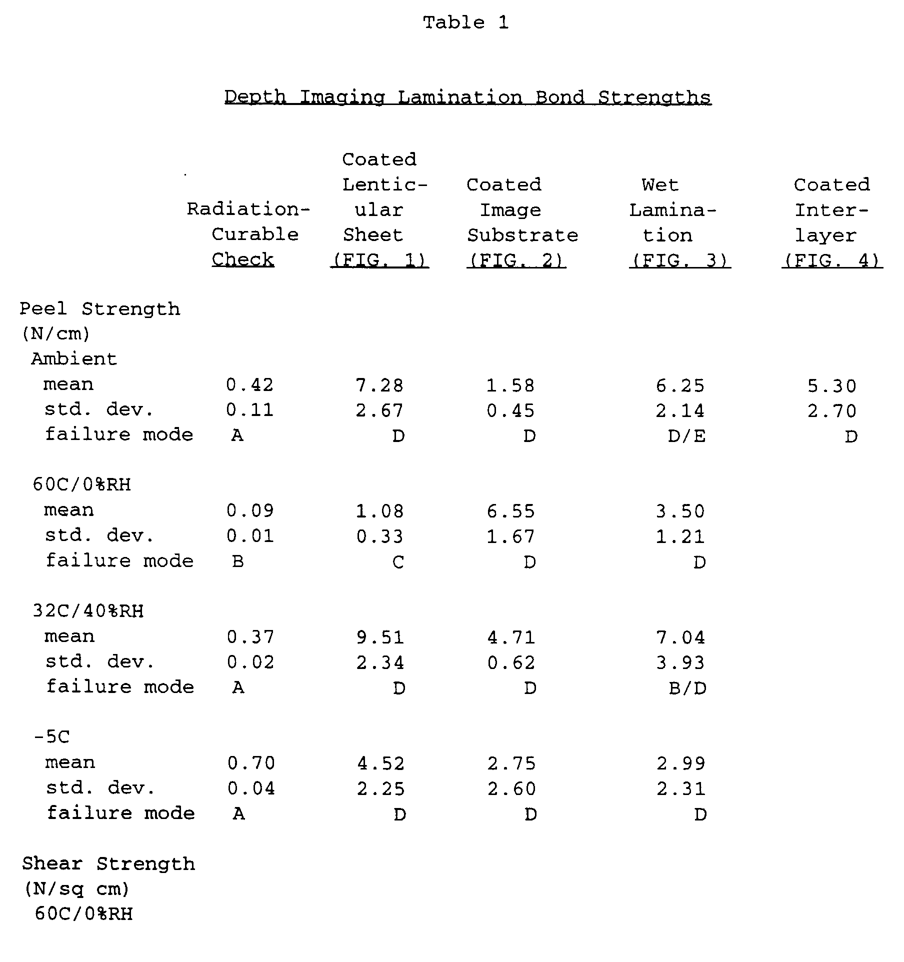

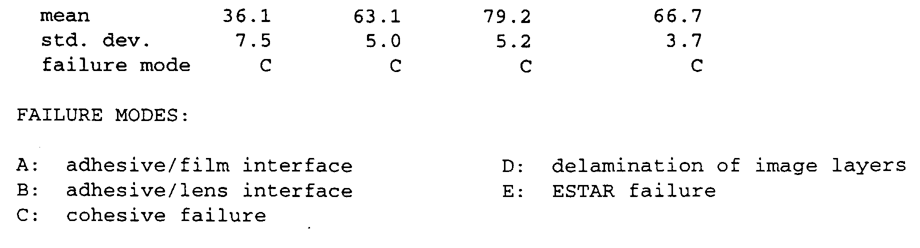

### BRIEF DESCRIPTION OF THE DRAWINGS

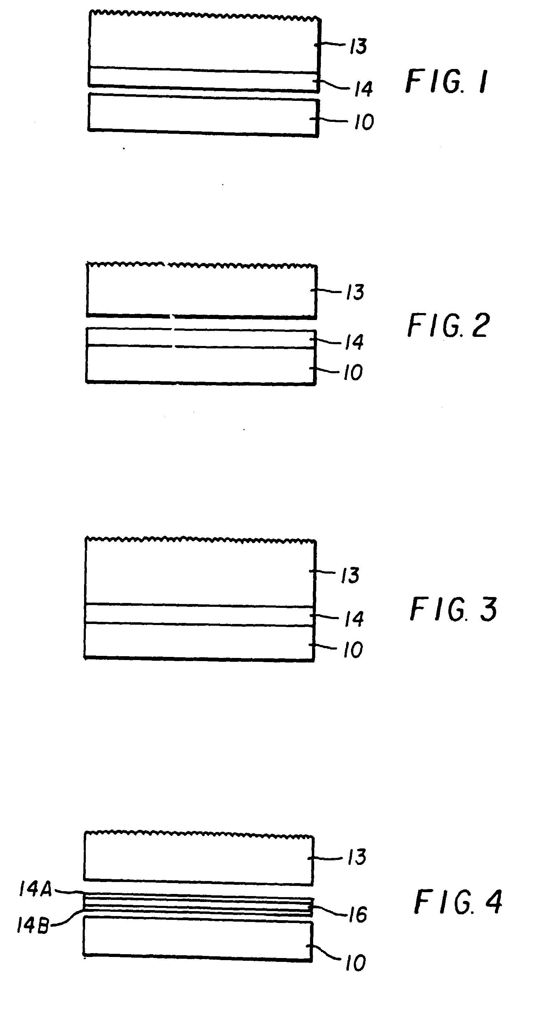

FIGS. 1-4 show different embodiments of methods of making a three-dimensional laminated hardcopy image.

### Detailed Description of the Preferred Embodiments

Several methods will first be briefly described and then the adhesive structure will be described in detail and finally a more detailed description of the methods will be provided.

Referring first to FIG. 1 where there is shown a processed image substrate 10. Such substrate may be a polyester material with a photographically developed image. Also shown is a lenticular sheet 13 of polyester material which has a series of lenslets formed on the top surface thereof. In this arrangement an adhesive 14 is pre-coated on the lenticular sheet 13 in order to fasten the lenticular sheet 13 to the image substrate 10. The adhesive 14 is moistened, preferably by water, and becomes activated to change from a dry to a binding state and then is pressed into contact with the image substrate 10.

In the arrangement shown in FIG. 2, the adhesive 14 is first coated on the image substrate 10, the undersurface of the lenticular sheet 13 is treated via corona discharge to facilitate adhesion and then the adhesive 14 is moistened which secures the image substrate 10 the lenticular sheet 13. In the FIG. 3 arrangement the adhesive 14 is actually applied to either the lenticular sheet 13 or the image substrate 10 in a moistened condition so it has already been activated for performing the laminate. In the FIG. 4 arrangement there is provided a carrier 16 having adhesive coatings 14A and 14B respectively on its top and bottom surfaces. The carrier is transparent and can be made of polyester, for example. The adhesive on both surfaces is moistened and the image substrate 10 and the lenticular sheet 13 are placed into contact with the corresponding adhesives to thereby complete the laminate.

In accordance with the invention a high molecular weight polymer which when moistened, preferably by water, can be activated to change from a dry to a binding state. This adhesive must, of course, be transparent. It has been determined that a particular amorphous polyester that disperses in water is suitable in this invention. This water dispersibility is attributed, in large part, to the presence of ionic substituents attached to the polymer chain having the following structure: 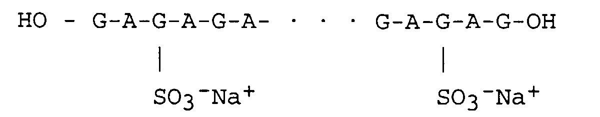 wherein:
A is an aromatic dicarboxylic acid moiety;
G is an aliphatic or cycloaliphatic glycol residue; and
-OH is an hydroxy end group.

It has been determined that Eastman Chemical Company AQ polymers have the above structure and exhibit adhesion to both the carriers currently being used to produce depth images. The lenticular sheet material 13 of choice is KODAR PETG and the imaged material is of the product line including Kodak's DURATRANS, DURAFLEX and DURACLEAR.

Returning now to FIG. 1, the adhesive 14 may be pre-applied to the smooth side of the lenticular sheet 13 and dried in place. The adhesive 14 is tack-free and would require no unique protection prior to assembly. Typical dry adhesive thickness can be on the order of 1-2 µm, however, upper and lower limits have yet to be established. As with any coating/bonding operation, it is prudent to clean the coating surface to remove any dirt, fingerprints, mold-release agents, etc. Wiping the surface with a relatively harmless, non-solvent for the sheet, methanol for example, has been shown to constitute adequate surface preparation. The coated (and dried) adhesive 14 can be "activated" just prior to assembly by ordinary, ambient temperature water. The water can be applied either by spray or mist or by dipping the entire lens and letting excess water run off. Within minutes the carriers should be brought together during which time, optical alignment can be achieved. The composite is then passed through a nip laminator, squeezing out any excess water and entrapped air, to provide a three-dimensional laminate hardcopy image. Although the laminate is sufficiently bonded at this point to allow handling without affecting optical alignment, it should be dried for a minimum of 24 hours at 20°C (minimum) and 60%RH (maximum) prior to final use.

Returning to FIG. 2 which involves application of adhesive 14 to the emulsion side of the image substrate 10. Again, a 1-2 µm layer of dry adhesive 14 is sufficient and direct application of adhesive solution (i.e. during the coating process) does not appear to affect the image or dye stability. In this method it is preferable that the lenticular sheet 13 be treated in some manner to provide a more hydrophilic, lower surface energy interface for greater bond strength. Flame treatment, ion implantation and corona and plasma treatments can be acceptable methods to achieve this. Practicality was demonstrated using a corona discharge treatment of approximately 2 kw at a rate of about 5 cm/sec. The adhesive-coated substrate can be activated as described above and the alignment, lamination, and drying steps would be identical.

Another method in accordance with the invention involves the direct, wet lamination of the image substrate 10 and lenticular sheet 13, using an aqueous solution or dispersion of adhesive 14 as opposed to re-wetting a dried adhesive 14 with water. This configuration is illustrated in FIG. 3. Although not essential, the bond strength of the final laminate is enhanced following surface treatment of the lenticular sheet 13 as mentioned above. The adhesive 14 can be applied to the surface of either the image substrate 10 or the lenticular sheet 13 although the lenslet sheet material is preferred. Once coated, the image substrate 10 and lenticular sheet 13 should be immediately brought together and optically aligned. The assembly can then be laminated and allowed to dry as detailed earlier. For example, Eastman Chemical Company adhesive AQ29D, diluted to 20% solids in water was deposited at a wet coverage of approximately 7.5 g/m² or a wet thickness of about 7 µm. The final amount of adhesive 14 is undetermined since excess is exuded during the lamination process. The advantage of this procedure is that it eliminates the need for coating equipment or pre-applied coatings. Adhesive 14 can be applied with a syringe, pipet, squeeze bottle or roller. The laminator is used to provide the ultimate adhesive thickness by squeezing out excess. Thickness is thus controlled by adhesive concentration and viscosity and nip pressure. The disadvantage of this approach is that the lamination process now involves a "glue" as opposed to pure water. Material inventory and equipment clean-up become slightly more complex.

Another method, as illustrated in FIG. 4, involves the use of an additional carrier 16 to produce the final lamination. The carrier 16 is an interlayer composed of a thin, transparent web of plastic material (i.e. polyethylene terephthalate film) pre-coated on both sides with the moistenable adhesive 14. In a similar embodiment, the interlay may consist of a dry film of adhesive alone, without being supported on a separate carrier. The advantages of these processes are that such interlayers can be easily produced on existing manufacturing equipment, neither substrate need be coated with adhesive and the lamination procedure can be done with pure water, facilitating clean-up.

The present invention has been described with reference to preferred embodiments thereof. A particular type of adhesive has been described. However, other types of moistenable adhesives may be usable. These include formulations based on dextrin, gelatin, vegetable and cellulose gums and polyvinyl alcohol.

The invention has been described in detail with particular reference to certain preferred embodiments thereof, but it will be understood that variations and modifications can be effected within the spirit and scope of the invention.

### PARTS LIST

- 10: image substrate
- 13: lenticular sheet material
- 14: adhesive
- 14A: adhesive coatings
- 14B: adhesive coatings
- 16: carrier

## Claims

1. A method of producing a three-dimensional laminated hardcopy image comprising the steps of:
(a) storing a processed image in a substrate;
(b) providing a lenticular sheeet of material to be placed over the processed image to thereby complete the three-dimensional image; and
(c) fastening the substrate and the sheet together with an adhesive, such adhesive being characterized as a high molecular weight transparent polymer which when moistened is activated from a dry to a binding state and having the following structure: 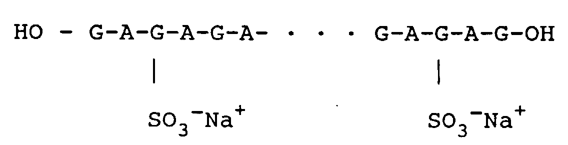 wherein:
A is an aromatic dicarboxylic acid moiety;
G is an aliphatic or cycloaliphatic glycol residue; and
-OH is an hydroxy end group.

2. A method of producing a three-dimensional laminated hardcopy image comprising the steps of:
(a) storing a processed image in a substrate;
(b) providing a lenticular sheeet of material to be placed over the processed image to thereby complete the three-dimensional image; and
(c) providing an adhesive on at least one surface of the substrate or the sheet to fasten the substrate to the sheet, such adhesive being characterized as a high molecular weight transparent polymer which when moistened is activated from a dry to a binding state and having the following structure: 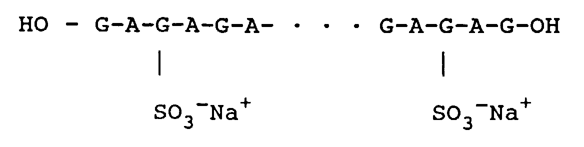 wherein:
A is an aromatic dicarboxylic acid moiety;
G is an aliphatic or cycloaliphatic glycol residue; and
-OH is an hydroxy end group.

3. The method of claim 2 wherein a dry adhesive is provided on said at least one surface.

4. The method of claim 3 wherein the dry adhesive is applied either on the lenticular sheet or on the substrate surface.

5. The method of claim 4 wherein the lenticular sheet is a polyester and, when the dry adhesive is applied to the substrate, corona discharge treatment of the lenticular sheet is effected prior to securing the adhesive to it.

6. The method of claim 1 wherein the adhesive is simultaneously applied to the surfaces of the lenticular sheet and the substrate.

7. The method of claim 1 further including providing adhesives on opposite surfaces of a carrier and moistening the adhesives to simultaneously apply them to the surfaces of the substrate and lenticular sheet.

8. The method of claim 1 wherein the adhesive is employed as a free-film, previously cast and dried, then subsequently moistened and used to bond the surfaces of the substrate and lenticular sheet.

9. A three-dimensional laminated hardcopy image comprising a substrate storing a processed image and a lenticular sheet of material laminated to said substrate, characterised in that said substrate and said sheet are secured together by a high molecular weight transparent polymer adhesive as defined in claim 1.
